# EUROPÄISCHE PATENTSCHRIFT

(11) **EP 1 901 877 B1**
(45) Veröffentlichungstag und Bekanntmachung des Hinweises auf die Patenterteilung: **04.10.2017**
(21) Anmeldenummer: 06724685.0
(22) Anmeldetag: 03.05.2006
(51) Int. Cl.: B23K 26/36, G01M 1/34, F04D 29/66

(54) **VERFAHREN UND ANORDUNG ZUR AUSWUCHTUNG EINES LÜFTERS**
METHOD AND ASSEMBLY FOR BALANCING A FAN
PROCEDE ET ENSEMBLE POUR EQUILIBRER UN VENTILATEUR

(30) Priorität: 11.07.2005 DE 102005033818
(43) Veröffentlichungstag der Anmeldung: 26.03.2008
(73) Patentinhaber: ebm-papst St. Georgen GmbH & Co. KG, 78112 St. Georgen (DE)
(72) Erfinder: MARZLUF, Bernhard, 77955 Ettenheim (DE)
(74) Vertreter: Raible Deissler Lehmann Patentanwälte PartG mbB
(86) Internationale Anmeldenummer: PCT/EP2006/004106
(87) Internationale Veröffentlichungsnummer: WO 2007/006356

(56) Entgegenhaltungen:
- WO-A1-2004/057195
- DE-A1- 4 339 064
- GB-A- 2 275 968
- JP-A- S6 440 191
- US-A- 5 738 503

## Beschreibung

Die Erfindung betrifft ein Verfahren und eine Anordnung zur Auswuchtung eines Lüfters mittels einer Laservorrichtung. Bevorzugt dient die Anordnung zum Auswuchten eines Lüfters, der durch einen Außenläufermotor angetrieben wird und in einem Gehäuse angeordnet ist, und vor allem zum Auswuchten von Klein- und Kleinstlüftern.

Im Betrieb eines Lüfters kann eine Unwucht des Rotors bzw. des Lüfterrads des Lüfters unerwünschte Geräusche und eine ungleichmäßige Beanspruchung und Abnutzung bewirken, was zu einer Reduzierung der Lebensdauer des Lüfters führen würde. Deshalb muss dieser ausgewuchtet werden. Dies ist besonders schwierig bei Klein- oder Kleinstlüftern, da dort die rotierenden Teile außerordentlich klein sind.

Gebräuchliche Verfahren verwenden sogenannte Wuchttaschen am Lüfterrad, in welche Ausgleichsgewichte zum Kompensieren von Unwuchten eingesetzt werden. Auch ist aus der DE 43 39 064 A1 ein Wuchtverfahren bekannt, bei dem von Unwuchtstellen am Lüfterrad mittels einer Laservorrichtung Material abgetragen wird.

Ferner ist es aus der GB 2 275 968 bekannt, ein Gebläserad dadurch auszuwuchten, dass man das freie Ende einer Welle des Gebläses in eine Luftansaugöffnung ragen lässt. An diesem freien Ende befindet sich eine Ringnut, und in diese wird, durch die Ansaugöffnung hindurch, als Auswuchtgewicht ein Sprengring in der für die Auswuchtung erforderlichen Größe und Orientierung eingeclipst.

Die JP S64 40191 A zeigt eine Auswuchtvorrichtung zum Auswuchten eines Werkstücks, bei der ein Werkstoff in einer Rille vorgesehen ist und von dort durch einen Laser entfernt werden kann, um das Werkstück auszuwuchten.

Es ist deshalb eine Aufgabe der Erfindung, ein neues Verfahren und eine neue Anordnung zur Auswuchtung eines Lüfters, sowie einen damit herstellbaren ausgewuchteten Lüfter, bereit zu stellen.

Nach der Erfindung wird diese Aufgabe gelöst durch ein Verfahren nach Anspruch 1. Durch die Messung von Lage und Größe der Unwucht kennt man mindestens eine Bearbeitungszone an einem Rotor-Teilbereich, an der durch flächiges Abtragen von Material die Unwucht reduziert werden kann. Auf der Grundlage des Messergebnisses wird die Laservorrichtung angesteuert, um den Laserstrahl so zu erzeugen, dass er an der ermittelten Bearbeitungszone innerhalb sehr kurzer Zeit eine Quantität an Werkstoff abträgt, welche der Größe der zuvor ermittelten Unwucht ziemlich genau entspricht. Dies ermöglicht ein schnelles Auswuchten einer großen Zahl von Lüftern, insbesondere von Klein- und Kleinstlüftern, bei denen sonst eine exakte Auswuchtung einigen Aufwand an Zeit und Geld erfordern würde.

Eine bevorzugte Weiterbildung des erfindungsgemäßen Verfahrens ist Gegenstand des Anspruchs 16. Hierbei ist ein Gehäusebereich des Lüfters aus einem den Laserstrahl absorbierenden Werkstoff ausgebildet, und die Laservorrichtung wird derart ausgebildet, dass durch den Laserstrahl in diesem Gehäusebereich eine Durchtrittsöffnung erzeugt werden kann, durch welche sich der Laserstrahl zu einem Rotor-Teilbereich erstreckt, an dem zwecks Auswuchtung Werkstoff abgetragen werden soll. Somit kann der Laserstrahl den Gehäusebereich durch diese Durchtrittsöffnung durchdringen, ohne dabei Energie an das Lüftergehäuse abzugeben, so dass die komplette Energie des Laserstrahls zur Abtragung des Werkstoffs an einer geeigneten Stelle des Rotor-Teilbereichs verfügbar ist, um dort eine Auswuchtung zu ermöglichen.

Eine andere Lösung der gestellten Aufgabe ergibt sich durch eine Anordnung gemäß Patentanspruch 24. Eine solche Anordnung ermöglicht ein schnelles und dabei doch exaktes Auswuchten von Lüftern und insbesondere von Klein- und Kleinstlüftern.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:
- Fig. 1: ein Blockdiagramm einer bevorzugten Ausführung einer erfindungsgemäßen Anordnung zum Auswuchten eines Lüfters,
- Fig. 2: einen stark vergrößerten Längsschnitt durch einen Lüfter und eine Laservorrichtung zum Auswuchten dieses Lüfters, gemäß einer ersten Ausführungsform der Erfindung,
- Fig. 3: eine perspektivische Ansicht der Anordnung nach Fig. 2,
- Fig. 4: eine Fotografie eines erfindungsgemäß ausgewuchteten Lüfterrads,
- **Fig. 4A**: **eine erste Abwicklung zur Erläuterung der Fotografie nach** **Fig. 4****,**
- **Fig. 4B**: **eine zweite Abwicklung zur Erläuterung der Fotografie nach** **Fig. 4****,**
- Fig. 5: einen stark vergrößerten Längsschnitt durch einen Lüfter und eine Laservorrichtung zur Auswuchtung dieses Lüfters, nach einer zweiten Ausführungsform der Erfindung,
- Fig. 6: eine perspektivische Ansicht der Anordnung nach Fig. 5,
- Fig. 7: ein Flussdiagramm eines Verfahrens zum Auswuchten eines Lüfters, und
- Fig. 8: ein Flussdiagramm eines Verfahrens zum Erzeugen einer Durchtrittsöffnung mittels einer erfindungsgemäßen Anordnung.

In der folgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

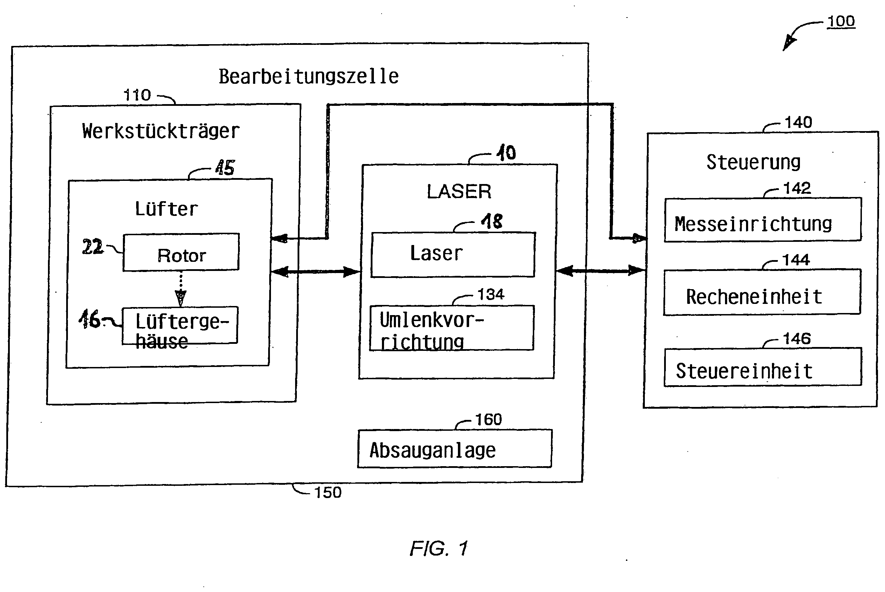

**Fig. 1** zeigt ein Blockdiagramm, welches die prinzipielle Funktionsweise einer Auswuchtanordnung 100 mit einer Bearbeitungszelle 150 und einer Steuerung 140 gemäß der vorliegenden Erfindung illustriert. Die Anordnung 100 dient zum Auswuchten eines Lüfters 15 mittels einer Laservorrichtung 10.

Die Laservorrichtung 10 weist beispielhaft einen Laser 18 zur Erzeugung eines Laserstrahls und eine steuerbare Umlenkvorrichtung 134 auf. Letztere ist dazu ausgebildet, den Laserstrahl auszurichten, wobei dessen Richtung geändert oder dieser parallel versetzt werden kann. Die Laservorrichtung 10 dient dazu, einen Laserstrahl zu erzeugen, der verwendbar ist, um die Unwucht des Lüfters zumindest zu verringern.

Der Lüfter 15 hat ein Lüftergehäuse 16 und einen in diesem drehbar gelagerten Rotor 22. Letzterer ist zumindest in einem Rotor-Teilbereich aus einem Werkstoff ausgebildet, der durch den von dem Laser 18 erzeugten Laserstrahl bearbeitbar ist. Das Lüftergehäuse 16 ist zumindest in einem Teilbereich derart ausgebildet, dass es eine Bearbeitung des Rotor-Teilbereichs mittels der Laservorrichtung 10 durch einen vom Laser 18 ausgehenden, sich durch den Gehäuse-Teilbereich zum Rotor-Teilbereich erstreckenden Laserstrahl ermöglicht.

Die Bearbeitungszelle 150 ist zur Aufnahme eines Werkstückträgers 110 ausgebildet, auf welchem der Lüfter 15 zur Auswuchtung befestigt wird. In der Zelle 150 sind die Laservorrichtung 10 und eine Absauganlage 160 angeordnet. Die Absauganlage 160 dient zum Absaugen von Material, welches bei der Auswuchtung des Lüfters 15 von dem Rotor 22 abgetragen wird.

Die Steuerung 140 steuert das Wuchtverfahren und weist beispielhaft eine Messeinrichtung 142, eine Recheneinheit 144 und eine Steuereinheit 146 auf. Die Messeinrichtung 142 misst die vom Lüfter 15 erzeugte Unwucht und ist dazu ausgebildet, mindestens eine Bearbeitungsstelle im Rotor-Teilbereich zur Reduzierung der Unwucht zu bestimmen. Durch Abtragen von Material an der Bearbeitungsstelle wird die Unwucht reduziert. Die Messeinrichtung kann als ermittelte Daten beispielsweise die Winkellage der mindestens einen Bearbeitungsstelle, die abzutragende Menge an Material an der mindestens einen Bearbeitungsstelle, und/oder die Maße der abzutragenden Bearbeitungsstelle in x- und y-Richtung, ausgeben. Je nach Anwendungsfall kann es auch vorteilhaft sein, mehrere Bearbeitungsstellen zu ermitteln.

Die Recheneinheit 144 erzeugt Steuersignale zum Steuern der Laservorrichtung 10, welche Signale von der Steuereinheit 146 zum Steuern der Laservorrichtung 10 verwendet werden.

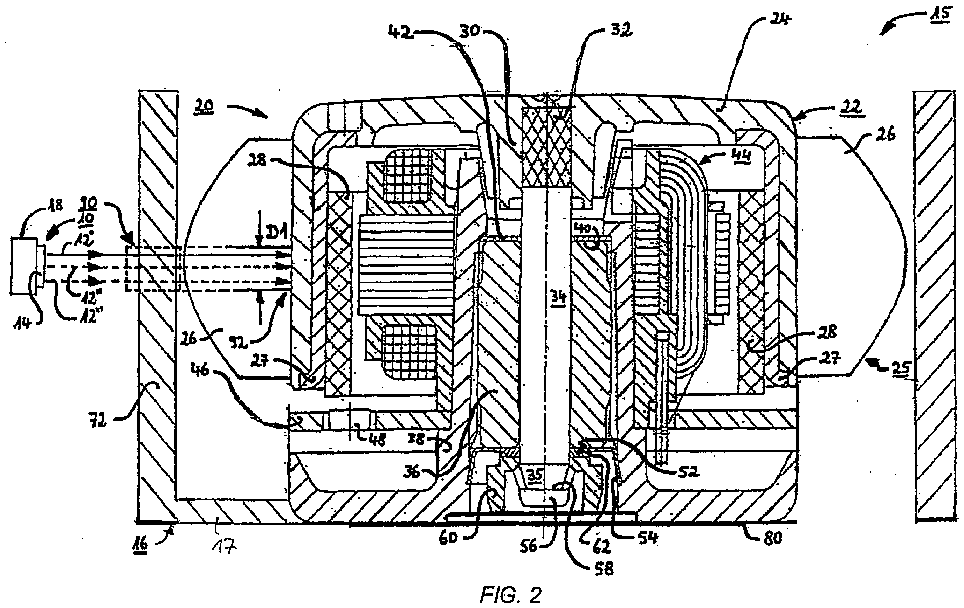

Die Arbeitsweise der Anordnung 100 wird nachfolgend unter Bezugnahme auf Fig. 2 beschrieben.

**Fig. 2** zeigt, etwa fünffach vergrößert, einen Längsschnitt durch eine bevorzugte Ausführungsform des Lüfters 15 aus Fig. 1. Der Laser 10 aus Fig. 1 ist in Fig. 2 nur schematisch angedeutet. Alle anderen Elemente aus Fig. 1 sind aus Gründen der Übersichtlichkeit nicht in Fig. 2 dargestellt.

Der Lüfter 15 weist beispielhaft einen in dem Lüftergehäuse 16 angeordneten und über mindestens einen Steg 17 mit diesem verbundenen Außenläufermotor 20 üblicher Bauart auf, wie er bevorzugt zum Antrieb von sehr kleinen Lüftern Anwendung findet. Der Motor 20 weist den Außenrotor 22 auf. Dieser hat einen Rotortopf 24, an dessen Außenumfang ein Lüfterrad 25 mit Lüfterflügeln 26 eines Axiallüfters vorgesehen ist, die im Betrieb, je nach Drehrichtung und bezogen auf Fig. 2, entweder den Rotor 22 nach oben ziehen oder nach unten pressen. Allerdings ist die Erfindung nicht auf einen bestimmten Lüftertyp beschränkt. Vielmehr können auch andere Lüftertypen erfindungsgemäß ausgewuchtet werden, wie beispielsweise Querstromlüfter.

Der Außenrotor 22 und das Lüfterrad 25 sind zumindest in einem Rotor-Teilbereich 92 bevorzugt aus Kunststoff, Keramik, Metall, einem Verbund aus Kunststoff, Keramik oder Metall, Kunststoff mit Pigmenten aus Keramik oder Metall, oder einer Mischung aus Kunststoff mit Keramik oder Metall ausgebildet.

In dem Rotortopf 24 ist ein magnetischer Rückschluss 27 aus Weicheisen befestigt, und auf seiner Innenseite ein radial magnetisierter Rotormagnet 28, der z.B. vierpolig magnetisiert sein kann. Der Rotortopf 24 hat einen Boden 30, in dem ein geriffeltes oberes Wellenende 32 einer Rotorwelle 34 durch Kunststoffspritzen befestigt ist, deren unteres, freies Wellenende mit 35 bezeichnet ist. Zur radialen Lagerung der Welle 34 dient beispielhaft ein Gleitlager 36, wobei zwischen der Welle 34 und dem Lager 36 ein sogenanntes Lagerspiel besteht. Naturgemäß ist eine Lagerung in Kugellagern ebenfalls möglich.

Wie Fig. 2 zeigt, ist die Gleitlagerbuchse 36 in einem Lagerrohr 38 angeordnet, in dem diese Buchse 36 mit entsprechenden Toleranzen bei der Montage durch Einpressen befestigt wird. Die Lagerbuchse 36 liegt mit ihrem in Fig. 2 oberen Ende 40 gegen eine im Lagerrohr 38 angeordnete Ringscheibe 42 an, durch welche die Welle 34 hindurchragt. Auf der Außenseite des Lagerrohres 38 ist der Innenstator 44 des Motors 20 befestigt, außerdem eine Leiterplatte 46, in welcher, wie dargestellt, ein Hall-IC 48 befestigt ist, der vom axialen Streufeld des Rotormagneten 28 gesteuert wird. Die untere Öffnung des Lagerrohres 38 ist von einem Klebeschild 80 aus Metall überdeckt, welches als Typenschild dient.

Bei Kleinstlüftern hat die Welle 34 einen Durchmesser in der Größenordnung von 1 bis 3 mm, was eine mechanische Sicherung sehr erschwert und bei kleinen Wellendurchmessern sogar unmöglich machen kann, denn dann hat die Welle 34 nur noch den Durchmesser einer Nähnadel. Wie Fig. 2 zeigt, ist das untere Ende 52 der Lagerbuchse 36 hier durch einen Krallenring 54 gesichert, dessen Krallen sich bei der Montage in der Innenseite des Lagerrohres 38 eingraben und dort verhaken.

Die Welle 34 hat an ihrem Endbereich 56 eine Ringnut 58, in die ein Halteglied 60 eingerastet wird, dessen in Fig. 2 obere Seite eine Ringscheibe 62 stützt, die zwischen diesem oberen Ende und dem unteren Ende 52 der Lagerbuchse 36 liegt und an dieser Stelle Reibungsverluste verringert.

Das Lüftergehäuse 16 ist zumindest in einem Gehäuse-Teilbereich 90 bevorzugt aus Kunststoff ausgebildet und derart ausgeführt, dass ein vom Laser 10 erzeugter Laserstrahl 12' das Lüftergehäuse 16 durchdringen kann, um vom Außenrotor 22 und/oder dem Lüfterrad 15 Material abzutragen. Hierzu ist das Lüftergehäuse 16 bei dieser Ausführungsform zumindest im Gehäuse-Teilbereich 90 aus einem für den Laserstrahl 12' durchlässigen Werkstoff ausgebildet, welcher ein Durchdringen des Laserstrahls 12' ohne wesentlichen Energieverlust ermöglicht. Auch ist der Gehäuse-Teilbereich 90 derart ausgebildet, dass der Laser 10 von einem Teilbereich 92 mit der Höhe D1 von dem Außenrotor 22 und/oder dem Lüfterrad 15 Material abtragen kann.

Gemäß einer bevorzugten Ausführungsform ist der Gehäuse-Teilbereich 90 an einer Seite 72 des Lüftergehäuses 16 angeordnet, welche parallel zur axialen Richtung der Rotorwelle 34 liegt, um das Abtragen von Material von einer Umfangsfläche des Rotors 22 bzw. des Lüfterrads 25, d.h., von der Außenseite des Rotortopfs 24 und/oder einem Außenbereich eines Lüfterflügels 26, zu ermöglichen, welche Umfangsfläche ebenfalls im Wesentlichen parallel zur axialen Ausrichtung der Welle 34 liegt. Der Außenrotor 22 und das Lüfterrad 25 sind zumindest in dem Teilbereich 92 auf der Rotorumfangsfläche aus einem den Laserstrahl 12' absorbierenden Werkstoff ausgebildet. Somit kann der Laserstrahl 12' in den Rotor-Teilbereich 92 eindringen und aus diesem Material verdampfen bzw. abtragen.

Die Laservorrichtung 10 weist, wie bei Fig. 1 beschrieben, den Laser 18 und die Umlenkvorrichtung 134 auf. Der Laser 18 ist vorzugsweise ein CO₂- oder Nd-YAG Laser, welcher dazu ausgebildet ist, Laserimpulse bzw. sogenannte "Laserschüsse" zu erzeugen oder bei stehendem Rotor im cw-Betrieb zu arbeiten. Die Laserimpulse können durch geeignete Einrichtungen, z.B. opto-akustische Schalter, auch außerhalb des Laserresonators erzeugt werden.

Gemäß Fig. 2 hat die Laservorrichtung 10 als Umlenkvorrichtung 134 eine schematisch dargestellte y-Ablenkeinheit 14, welche den Laserstrahl 12' in y-Richtung ablenken kann. Wie durch beispielhafte Laserstrahlen 12" und 12''' angedeutet, kann die y-Ablenkeinheit 14 hierzu den Laserstrahl 12' parallel versetzen, um ihn auf verschiedene Stellen des Rotor-Teilbereichs 92 auszurichten.

### Arbeitsweise

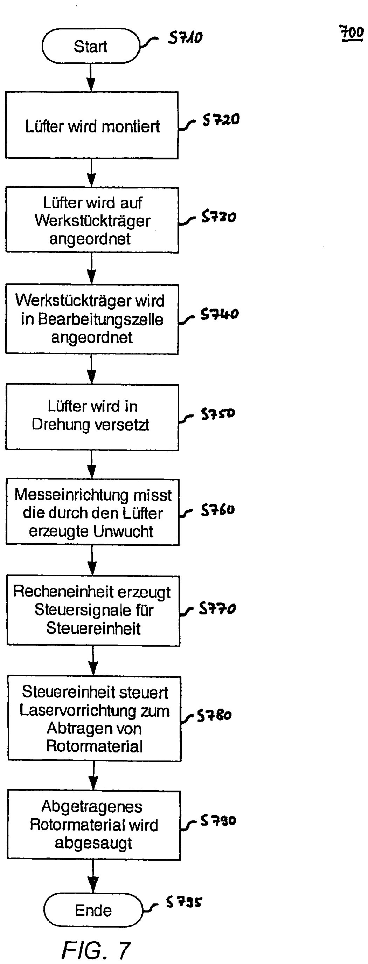

Nachfolgend wird die Arbeitsweise der Anordnung 100 (Fig. 1) unter Bezugnahme auf Fig. 2 anhand des Flussdiagramms der Fig. 7 beschrieben.

**Fig. 7** zeigt ein Flussdiagramm eines bevorzugten Verfahrens 700 zur Auswuchtung des Lüfters 15 mittels der Laservorrichtung 10. Das Verfahren 700 beginnt mit Schritt S710.

In Schritt S720 "Lüfter wird montiert" wird der Lüfter 15 zunächst soweit vormontiert, dass er voll funktionsfähig ist, wobei zumindest das Lüfterrad 25 auf dem Rotor 22 befestigt und der Rotor 22 mit dem Lüfterrad 25 in dem Lager 36 angeordnet wird. In Schritt S730 "Lüfter wird auf Werkstückträger angeordnet" wird der vormontierte Lüfter 15 auf dem Werkstückträger 110 befestigt und elektrisch angeschlossen, um seine Inbetriebnahme zu ermöglichen.

In Schritt S740 "Werkstückträger wird in Bearbeitungszelle angeordnet" wird der Werkstückträger 110 mit dem darauf befestigten Lüfter 15 in der Bearbeitungszelle 150 zur Auswuchtung des Lüfters 15 angeordnet. In der Bearbeitungszelle 150 wird in Schritt S750 "Lüfter wird in Drehung versetzt" zunächst der Innenstator 44 bestromt, um den Außenrotor 22 mit dem Lüfterrad 25 in Umdrehung mit einer für den Normalbetrieb des Lüfters 15 vorgesehenen Drehgeschwindigkeit zu versetzen, wobei in Laborversuchen Drehzahlen bis zu 4200 U/min erzeugt wurden. Alternativ ist eine - gegebenenfalls auch automatisierte - Anordnung des Lüfters 15 an dem Werkstückträger 110 in der Bearbeitungszone 150 möglich.

In Schritt S760 "Messeinrichtung misst die durch den Lüfter erzeugte Unwucht" wird die durch den Lüfter 15 erzeugte Unwucht mittels der Messeinrichtung 142 gemessen, um mindestens eine Bearbeitungsstelle im Rotor-Teilbereich 92 zur Reduzierung der Unwucht durch Abtragung von Material an dieser Bearbeitungsstelle zu bestimmen. Die Messung der Unwucht ist hierbei nicht auf eine bestimmte Messart bzw. einen bestimmten Typ einer Messeinrichtung beschränkt. Vielmehr kann die Messung unter Verwendung unterschiedlicher Messtechniken erfolgen, z. B. über übliche Gewichtsmessungen oder unter Verwendung von Schwingkraftaufnehmern oder der Laservorrichtung 10. Hierbei finden gebräuchliche Wuchtverfahren Anwendung, weshalb die Messung der Unwucht hier nicht in weiteren Einzelheiten beschrieben wird.

Auf der Grundlage der von der Messeinrichtung 142 gemessenen Unwucht im Rotor-Teilbereich 92 bestimmt die Recheneinheit 144 entsprechende Bearbeitungsstellen am Rotor 22 bzw. am Lüfterrad 25. Nach der Messung der Unwucht und der Bestimmung der Bearbeitungsstellen erzeugt die Recheneinheit 144 im Schritt S770 "Recheneinheit erzeugt Steuersignale für Steuereinheit" Steuersignale zur Steuerung der Laservorrichtung 10, welche der Steuereinheit 146 zugeführt werden.

In Schritt S780 "Steuereinheit steuert Laservorrichtung zum Abtragen von Rotormaterial" steuert die Steuereinheit 146 die Laservorrichtung 10 auf der Grundlage der Steuersignale derart an, dass der Laser 18 zunächst den Laserstrahl 12' erzeugt, welcher ungehindert den für Laserenergie durchlässigen Gehäuse-Teilbereich 90 durchdringt und auf einer ersten Abtragslinie 13' in den Rotor-Teilbereich 92 eindringt, wodurch an den Bearbeitungsstellen Material vom Außenrotor 22 und/oder vom Lüfterrad 25 abgetragen wird. Hierbei kann Material sowohl von einem oder mehreren der Lüfterflügel 26, als auch vom Rotortopf 24 abgetragen werden.

Im Schritt S790 "Abgetragenes Rotormaterial wird abgesaugt" werden die entstehenden Dämpfe etc. zum großen Teil abgesaugt.

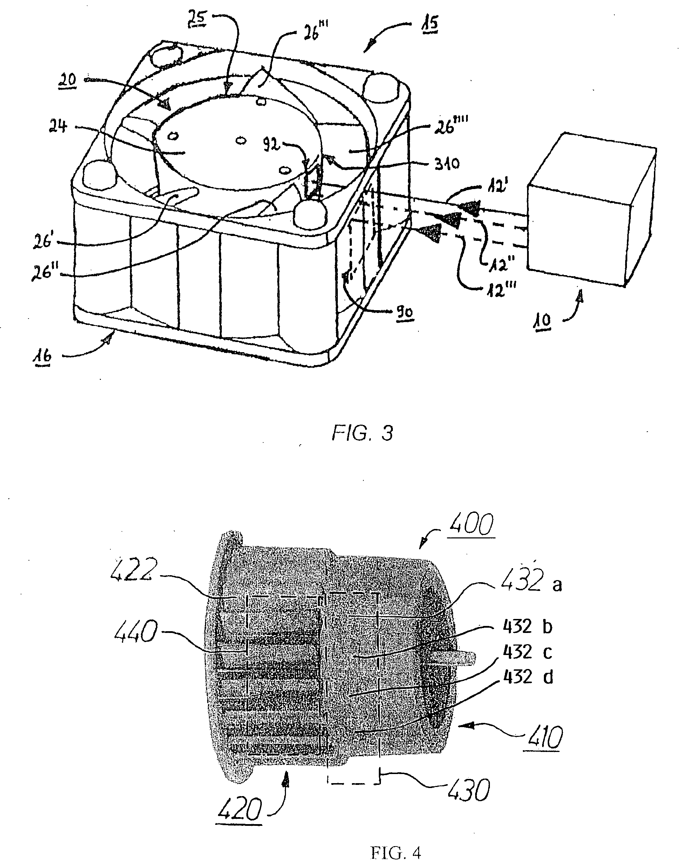

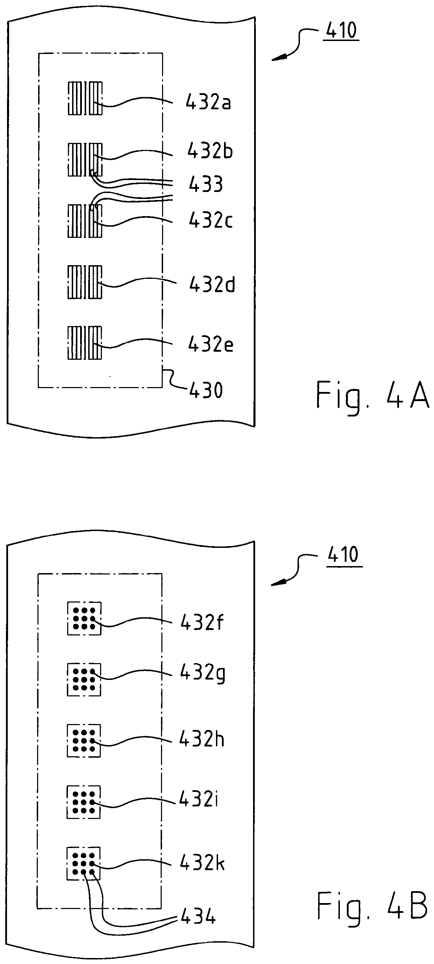

Vorzugsweise wird bei jeder weiteren Drehung des Rotors 22 eine entsprechende zusätzliche Abtragslinie 13", 13''' etc. erzeugt. Hierzu wird nach jeder Umdrehung die y-Ablenkeinheit 14 um ein bestimmtes Winkelinkrement verstellt. Beispielsweise wird die y-Ablenkeinheit 14 nach Erzeugen der Abtragslinie mit dem Laserstrahl 12' derart eingestellt, dass ein Laserstrahl 12" erzeugt wird, welcher die nächste Abtragslinie 13" ausbildet, usw. Somit kann jeweils ein rechteckiger oder quadratischer Bereich an den Bearbeitungsstellen zur Auswuchtung abgetragen werden, wie in Fig. 4 beispielhaft dargestellt. Bevorzugt werden hierbei entweder ein komplettes Viereck oder aber neun Punkte eines Quadrats mit dem Laser bearbeitet.

In einem Laborversuch wurde ein Lüfterrad mit einem Durchmesser von 36 mm mit einer Drehzahl von 4200 U/min gedreht, also mit einer Umfangsgeschwindigkeit von 7910 mm/s. Hierbei wurde für einen einzelnen Laserschuss ein Zeitfenster von 25 µs bestimmt, wobei eine Auflösung von 0,6° erreicht wurde. Von dem Lüfterrad wurde versuchsweise eine quadratische Ausnehmung von 16 mm² Größe und mit einer Tiefe von 0,2 mm abgetragen, wobei die Positionsgenauigkeit eines Laserschusses bei etwa 0,2 mm gewählt wurde, so dass insgesamt zur Erzeugung der quadratförmigen Ausnehmung zwanzig Abtragslinien erzeugt wurden. Die quadratische Ausnehmung wurde im Laborversuch in ca. 0,286 s erzeugt, wobei eine Masse von annähernd 6,08 mg vom Lüfterrad abgetragen wurde. Unter der Annahme, dass im Normalfall etwa 20 mg Masse bei der Auswuchtung von Lüftern abzutragen sind, ergibt sich eine maximale Abtragzeit von 0,941 s zur Auswuchtung für einen Lüfter gemäß einer bevorzugten Ausführungsform.

Beim Abtragen des Materials vom Rotor 22 und/oder dem Lüfterrad 25 mittels der Laservorrichtung 10 entstehen durch den Laserabbrand sowohl am Lüftergehäuse 16 als auch am Rotor 22 bzw. dem Lüfterrad 25 Materialrückstände. Diese sogenannten abrasiven Rückstände bzw. Abbrände werden in Schritt S790 mittels der Absauganlage 160 abgesaugt, um sie zu beseitigen oder mindestens zu reduzieren. Laborversuche haben gezeigt, dass es sehr aufwändig wäre, die Materialrückstände vollständig zu beseitigen, so dass in der Regel ein minimaler Rückstand am Lüftergehäuse 16 und/oder am Rotor 22 bzw. dem Lüfterrad 25 verbleibt.

Das Verfahren 700 endet im Schritt S795. Der Lüfter 15 kann dann vom Werkstückträger 110 gelöst werden, nachdem dieser aus der Bearbeitungszelle 150 herausgenommen und und der elektrische Anschluss des Lüfters 15 entfernt wurde. Alternativ kann zuvor eine erneute Messung stattfinden, um festzustellen, ob nach dem ersten Auswuchtzyklus noch eine zu beseitigende "Restunwucht" besteht, wobei die Schritte S750 bis S790 solange wiederholt werden können, bis die Unwucht des Lüfters 15 zumindest innerhalb bestimmter, vorgegebener Toleranzen beseitigt ist. Allerdings wurde bei Laborversuchen bereits beim ersten Auswuchtzyklus gewöhnlich eine Reduzierung der Unwucht um bis zu 90 % erreicht, d.h. die Unwucht des Lüfters 15 wurde bereits beim ersten Auswuchtzyklus fast ganz beseitigt.

In vorteilhafter Weise wird der Lüfter 15 erst nach der Montage des Rotors 22 im Lüftergehäuse 16 ausgewuchtet, so dass auch Unwuchten kompensiert werden, welche durch das Lagerspiel, sowie durch Toleranzen bei der Montage des Lagers 36 im Lagerrohr 38, bewirkt werden. Da der zur Auswuchtung verwendete Laserstrahl 12', 12", 12''' hierbei den Gehäuse-Teilbereich 90 durchdringt und im Wesentlichen keine Energie an das Lüftergehäuse 16 abgibt, wird letzteres nicht vom Laserstrahl 12', 12", 12''' beschädigt, und der größte Teil der Energie des Laserstrahls 12', 12", 12''' steht zur Verfügung, um Material von der Position der Unwucht im Rotor-Teilbereich 92 abzutragen. Man erhält also ein sehr präzises und schnelles Wuchtverfahren.

Bei der Durchführung der Verfahrensschritte sind viele Variationen möglich. So könnte z. B. die Unwucht während des Laservorgangs weiterhin gemessen werden, und das Abtragen des Materials kann entweder bei einem sich drehenden Rotor oder aber auch bei einem stehenden Rotor erfolgen.

**Fig. 3** zeigt eine perspektivische Ansicht des Lüfters 15 und der Laservorrichtung 10 der Fig. 2. Fig. 3 verdeutlicht die Anordnung des Außenläufermotors 20 mit dem Rotortopf 24 und beispielhaften Lüfterflügeln 26', 26", 26''', 26"" des Lüfterrades 25 in dem Lüftergehäuse 16.

Wie aus Fig. 3 klar ersichtlich, durchdringen die von der Laservorrichtung 10 erzeugten Laserstrahlen 12', 12", 12''' den Gehäuse-Teilbereich 90, ohne hierbei auf das Lüftergehäuse 16 einzuwirken. Wie Fig. 3 beispielhaft zeigt, tragen die Laserstrahlen 12', 12", 12''' Material von dem Laserenergie absorbierenden Rotor-Teilbereich 92 auf der Umfangsfläche 310 des Rotortopfs 24 ab.

**Fig. 4** zeigt eine Darstellung 400 eines Labormusters eines Rotors 410, welcher gemäß einer bevorzugten Ausführungsform der Erfindung ausgewuchtet wurde und an welchem ein Lüfterrad 420 mit einer Vielzahl von Lüfterflügeln 422 befestigt ist.

Wie Fig. 4 zeigt, wurde aus einem Rotor-Teilbereich 430 zur Auswuchtung Material abgetragen, wobei fünf quadratische Abtragstellen 432 erzeugt wurden, von denen die Stellen 432a, 432b, 432c und 432d sichtbar sind. Wie oben beschrieben, wurde das während der Auswuchtung von diesen Abtragstellen 432 abgetragene Material abgesaugt. Insbesondere wurde bei der Auswuchtung des Rotors 410 gemäß Fig. 4 das abgetragene Material von der Seite des Lüfterrades 420 her abgesaugt. Hierbei entstanden einerseits in einem Bereich 440 auf dem Lüfterrad und andererseits an den Seitenrändern der Abtragstellen 432 die in Fig. 4 ersichtlichen Materialrückstände.

Fig. 4A zeigt schematisch eine Abwicklung des Bereichs 430 der Fig. 4. In diesem befinden sich fünf quadratische Ausnehmungen 432a, 432b, 432c, 432d, 432e, die durch parallele Abtragslinien 433 mittels eines Laserstrahls (z.B. 12', 12", 12''' in Fig. 3) erzeugt wurden. Fig, 4B zeigt schematisch eine analoge Abwicklung der Fig. 4. Auch hier sind fünf quadratische Ausnehmungen 432f, 432g, 432h, 432i und 432k erzeugt, von denen jede durch neun Punkte 434 eines Quadrats mittels Ablasern erzeugt ist.

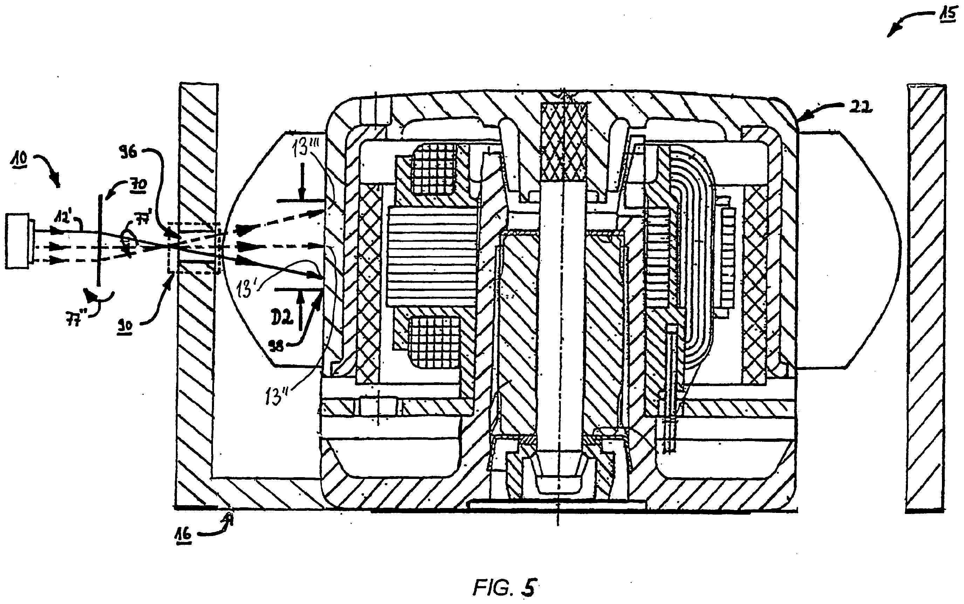

Fig. 5 zeigt den Lüfter 15 aus Fig. 2, dessen Lüftergehäuse 16 anders ausgebildet ist. In Fig. 5 sind nur die zur Erläuterung der zweiten Ausführungsform erforderlichen Elemente mit Bezugszeichen versehen und werden im Folgenden beschrieben. Alle anderen Elemente entsprechen denjenigen von Fig. 2 und werden deshalb nicht nochmals beschrieben. Der Gehäuse-Teilbereich 90 des Lüftergehäuses 16 ist hier gemäß Fig. 5 mit einem den Laserstrahl 12' absorbierenden Material ausgebildet, so dass mittels des Laserstrahls 12' Material von dem Gehäuse-Teilbereich 90 abgetragen werden kann, um in diesem eine Durchtrittsöffnung 96 für die von der Laservorrichtung 10 erzeugten Laserstrahlen auszubilden. Ferner hat die Laservorrichtung 10 gemäß Fig. 5 als Umlenkvorrichtung eine schematisch dargestellte Umlenkoptik 70 mit angedeuteten Freiheitsgraden 77', 77". Die Umlenkoptik 70 wird beispielsweise durch eine geeignete optische Linse realisiert und dient dazu, die Richtung des Laserstrahls 12' zu verändern, wobei letzterer jeweils durch die Durchtrittsöffnung 96 hindurch auf einen Rotor-Teilbereich 98 mit der Höhe D2 gelenkt wird, welche aufgrund der Verwendung der Umlenkoptik 70 größer ist als die Höhe D1 des Rotor-Teilbereichs 92 der Fig. 2. Die dargestellten Auftreffstellen des Laserstrahls 12 auf die Peripherie des Rotors 22 sind mit 13', 13" und 13''' bezeichnet.

Es wird darauf hingewiesen, dass in Fig. 5 nur die Umlenkoptik 70 dargestellt ist, während in Fig. 2 ausschließlich die y-Ablenkeinheit 14 abgebildet ist. Erfindungsgemäß können beide Elemente jedoch gleichzeitig Anwendung finden.

### Arbeitsweise

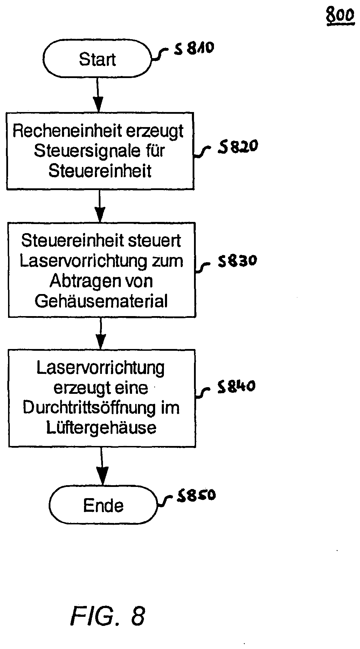

Die Auswuchtung des Lüfters 15 mittels der Laservorrichtung 10 gemäß Fig. 5 erfolgt gemäß dem anhand des Flussdiagramms der Fig. 7 im Detail beschriebenen Wuchtverfahren und wird deshalb hier nicht näher erläutert. Allerdings muss im Gegensatz zu der oben beschriebenen Arbeitsweise zunächst die Durchtrittsöffnung 96 erzeugt werden, wie nachfolgend unter Bezugnahme auf Fig. 8 im Detail beschrieben wird.

**Fig. 8** zeigt ein Flussdiagramm eines beispielhaften Verfahrens 800 zur Erzeugung der Durchtrittsöffnung 96 mittels der Laservorrichtung 10 unter Verwendung der Anordnung 100 der Fig. 1 gemäß einer bevorzugten Ausführungsform der Erfindung. Das Verfahren 800 beginnt mit einem Schritt S810.

In Schritt S820 "Recheneinheit erzeugt Steuersignale für Steuereinheit" bestimmt die Recheneinheit 144 zunächst Position und Größe der zu erzeugenden Durchtrittsöffnung 96 im Gehäuse-Teilbereich 90. Auf der Grundlage dieser Position und der erforderlichen Größe erzeugt die Recheneinheit 144 Steuersignale zur Steuerung der Laservorrichtung 10, welche der Steuereinheit 146 zugeführt werden.

In Schritt S830 "Steuereinheit steuert Laservorrichtung zum Abtragen von Gehäusematerial" steuert die Steuereinheit 146 die Laservorrichtung 10 auf der Grundlage der Steuersignale derart an, dass die Umlenkoptik 70 den Laserstrahl 12' so auf den Gehäuse-Teilbereich 90 ausrichtet, dass von diesem an der für die Durchtrittsöffnung 96 bestimmten Position Material abgetragen wird. Dies geschieht im Schritt S840 "Laservorrichtung erzeugt Durchtrittsöffnung im Lüftergehäuse". Die Umlenkoptik 70 wird hierbei derart angesteuert, dass der Laserstrahl 12' jeweils durch eine entsprechende Ausrichtung der Umlenkoptik 70 unter Verwendung der Freiheitsgrade 77' und/oder 77" so ausgerichtet wird, dass die Durchtrittsöffnung 96 präzise ausgebildet wird.- - Das Verfahren 800 endet in Schritt S850, wenn die Durchtrittsöffnung 96 fertiggestellt ist.

Gemäß einer bevorzugten Ausführungsform der Erfindung wird das Verfahren 800 zwischen den Schritten S740 und S750 der Fig. 7 ausgeführt. Die Durchtrittsöffnung 96 kann auch zu einem Zeitpunkt ausgebildet werden, der vor der Befestigung des Lüfters 15 auf dem Werkstückträger 110 zur Auswuchtung liegt, beispielsweise bereits bei der Herstellung des Lüftergehäuses 16. Die Öffnung 96 kann nach dem Auswuchten verschlossen werden, vorzugsweise durch einen Aufkleber.

Das Gehäuse ist im Gehäuse-Teilbereich 90 bevorzugt dünn, um ein schnelles und zeitlich definiertes Öffnen zu ermöglichen. Dabei ist es insbesondere für Spritzgussverfahren vorteilhaft, dass der Gehäuse-Teilbereich 90 nicht von Anfang an als Ausnehmung hergestellt werden muss, da solche Ausnehmungen in GehäuseSeitenteilen das Spritzgussverfahren komplizieren.

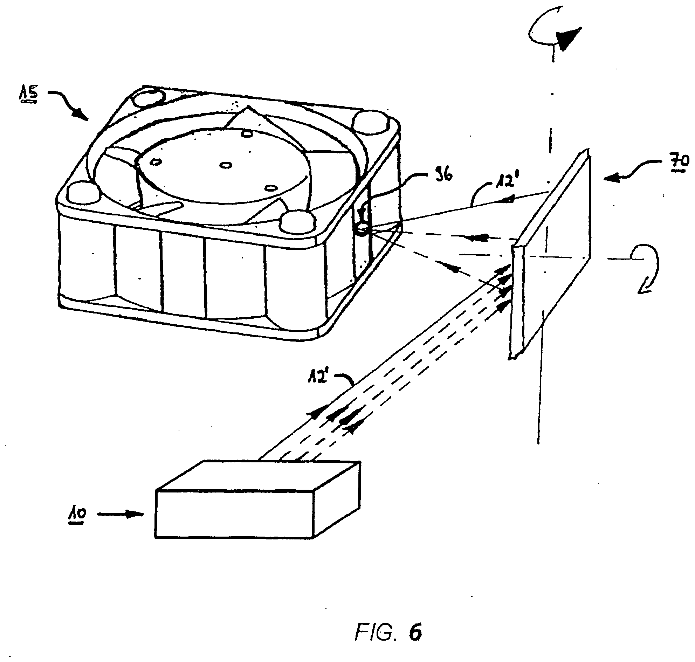

**Fig. 6** zeigt eine perspektivische Ansicht des Lüfters 15 und der Laservorrichtung 10 gemäß Fig. 5. Fig. 6 verdeutlicht beispielhaft die Anordnung der Umlenkoptik 70 relativ zur Laservorrichtung 10 und dem Lüfter 15. Wie Fig. 6 klar zeigt, wird der Laserstrahl 12' von der Umlenkoptik 70 derart umgelenkt, dass er durch die Durchtrittsöffnung 96 durchtritt.

Naturgemäß sind im Rahmen der in den Ansprüchen dargelegten Erfindung vielfache Abwandlungen und Modifikationen möglich.

## Patentansprüche

1. Verfahren zum Auswuchten eines Lüfters (15) mittels einer steuerbaren, außerhalb des Lüfters angeordneten Laservorrichtung (10), welche zur Erzeugung eines Laserstrahls (12') ausgebildet ist,
welcher Lüfter (15) ein Lüftergehäuse (16) und einen in dem Lüftergehäuse drehbar gelagerten Rotor (22) aufweist;
welcher Rotor (22) eine Drehachse und eine Rotorumfangsfläche (24, 26) aufweist und zumindest in einem Rotor-Teilbereich (92; 430), welcher Rotor-Teilbereich (92; 430) sich auf der Rotorumfangsfläche (24, 26) befindet, aus einem Werkstoff ausgebildet ist, der durch den Laserstrahl (12') bearbeitbar ist;
welches Lüftergehäuse (16) zumindest in einem Gehäuse-Teilbereich (90) derart ausgebildet ist, dass es eine Bearbeitung des Rotor-Teilbereichs (92) mittels der Laservorrichtung (10) durch einen von dieser ausgehenden, sich durch den Gehäuse-Teilbereich (90) zum Rotor-Teilbereich (92) erstreckenden Laserstrahl (12') ermöglicht; welches Verfahren folgende Schritte aufweist:
A) Der Rotor (22) des Lüfters (15) wird in Drehung versetzt (S750);
B) die durch den Rotor (22) erzeugte Unwucht wird gemessen, um mindestens eine Bearbeitungsstelle (432a bis 432k) im vorgegebenen Rotor-Teilbereich (92; 98; 430) zu ermitteln (S760), welche Bearbeitungsstelle (432a bis 432k) für die Reduzierung der gemessenen Unwucht geeignet ist;
C) die Laservorrichtung (10) wird angesteuert, um einen Laserstrahl (12') so zu erzeugen, dass dieser auf eine Auftreffstelle (13') am vorgegebenen Rotor-Teilbereich (92; 430) des rotierenden Rotors (22), welcher Rotor-Teilbereich (92; 430) sich auf der Rotorumfangsfläche befindet, gerichtet ist;
D) die Laservorrichtung (10) wird so angesteuert, dass bei einer Lage der Auftreffstelle (13', 13", 13''') innerhalb des vorgegebenen Rotor-Teilbereichs (92; 430), welcher sich auf der Rotorumfangsfläche befindet, durch Abtragen des durch den Laserstrahl (12') bearbeitbaren Werkstoffs von der ermittelten mindestens einen Bearbeitungsstelle (432a bis 432k) dort von dem rotierenden Rotor (22) Werkstoff abgetragen wird;
E) nach diesem Reduzieren der Unwucht wird die Auftreffstelle (13', 13", 13''') des Laserstrahls (12') innerhalb des vorgegebenen Rotor-Teilbereichs (92; 430), welcher sich auf der Rotorumfangsfläche befindet, an eine von der vorhergehenden Auftreffstelle (13') verschiedene Stelle (13") bewegt;
F) die Laservorrichtung (10) wird weiterhin gemäß Schritt D) so gesteuert, dass bei einer Lage der Auftreffstelle (13', 13", 13''') innerhalb des vorgegebenen Rotor-Teilbereichs (92; 430), welcher sich auf der Rotorumfangsfläche befindet, durch Abtragen des durch den Laserstrahl (12') bearbeitbaren Werkstoffs von der ermittelten mindestens einen Bearbeitungsstelle (92; 432) dort von dem rotierenden Rotor (22) Werkstoff abgetragen wird;
G) die Schritte E) und F) werden wiederholt, bis eine Werkstoffmenge von der ermittelten mindestens einen Bearbeitungsstelle (432a bis 432k) des vorgegebenen Rotor-Teilbereichs (92; 430) abgetragen ist, welche abgetragene Werkstoffmenge zur Reduzierung der beim Schritt B) ermittelten Unwucht dient.

2. Verfahren nach Anspruch 1, bei welchem nach jeder Drehung des Rotors (22) die Auftreffstelle (13') des Laserstrahls (12') auf den Rotor (22) um ein vorgegebenes Inkrement verstellt wird.

3. Verfahren nach Anspruch 1 oder 2, bei welchem durch das Zusammenwirken des Laserstrahls (12') an der augenblicklichen Auftreffstelle (13') und die Drehung des Rotors (22) relativ zu dieser augenblicklichen Auftreffstelle (13') die Abtragung von Werkstoff vom Rotor (22) in Form von Abtragslinien erfolgt.

4. Verfahren nach einem der Ansprüche 1 bis 3, bei welchem beim Auswuchten an einer Bearbeitungsstelle (432a bis 432k) ein rechteckförmiger Bereich des Werkstoffs vom Rotor (22) abgetragen wird.

5. Verfahren nach einem der vorhergehenden Ansprüche, bei welchem der von dem vorgegebenen Rotor-Teilbereich (92; 430) abgetragene Werkstoff abgesaugt wird (S790).

6. Verfahren nach einem der vorhergehenden Ansprüche, bei welchem durch den Laserstrahl (12', 12", 12''') an einer Mehrzahl von Bearbeitungsstellen (432a bis 432k) Werkstoff abgetragen wird.

7. Verfahren nach einem der vorhergehenden Ansprüche, bei welchem der vorgegebene Rotor-Teilbereich (92; 430) aus Kunststoff, Keramik oder Metall ausgebildet ist.

8. Verfahren nach einem der vorhergehenden Ansprüche, bei welchem der vorgegebene Rotor-Teilbereich (92; 430) aus einem Verbund aus Kunststoff, Keramik und/oder Metall ausgebildet ist.

9. Verfahren nach Anspruch 7 oder 8, bei welchem der vorgegebene Rotor-Teilbereich (92; 430) aus Kunststoff mit Pigmenten aus Keramik oder Metall ausgebildet ist.

10. Verfahren nach einem der Ansprüche 7 bis 9, bei welchem der vorgegebene Rotor-Teilbereich (92; 430) aus einer Mischung aus Kunststoff mit Keramik oder Metall ausgebildet ist.

11. Verfahren nach einem der vorhergehenden Ansprüche, bei welchem die Laservorrichtung (10) einen Laser (18) zur Erzeugung einer Laserstrahlung mit einer zur Bearbeitung des Werkstoffs des vorgegebenen Rotor-Teilbereichs (92; 430) geeigneten Wellenlänge aufweist.

12. Verfahren nach einem der vorhergehenden Ansprüche, bei welchem das Messen der im Betrieb auftretenden Unwucht mittels der Laservorrichtung (10) ausgeführt wird.

13. Verfahren nach einem der vorhergehenden Ansprüche, bei welchem die Rotorumfangsfläche (92) eine Seitenfläche eines Rotortopfs (24) und mit dieser verbundene Lüfterflügel (26) umfasst, und bei welchem Werkstoff durch den Laserstrahl im Bereich der Seitenfläche abgetragen wird.

14. Verfahren nach Anspruch 13, bei welchem Werkstoff durch den Laserstrahl auch im Bereich der Lüfterflügel (26) abgetragen wird.

15. Verfahren nach einem der vorhergehenden Ansprüche, bei welchem der Gehäuse-Teilbereich (90) aus einem den Laserstrahl (12') absorbierenden Werkstoff ausgebildet ist, welches Verfahren zusätzlich folgende Schritte aufweist:
C1) Die Laservorrichtung (10) wird derart angesteuert, dass durch den Laserstrahl (12') an einem Teilbereich (90) des Lüftergehäuses eine Durchtrittsöffnung (96) erzeugt wird;
C2) Die Laservorrichtung (10) wird im Schritt C1) derart angesteuert, dass sich der Laserstrahl (12') durch diese Durchtrittsöffnung (96) hindurch zu dem vorgegebenen Rotor-Teilbereich (98) erstreckt.

16. Verfahren nach Anspruch 15, bei welchem die Durchtrittsöffnung (96) nach dem Auswuchten verschlossen wird, insbesondere mittels eines Aufklebers.

17. Verfahren nach einem der vorhergehenden Ansprüche, bei welchem die Laservorrichtung (10) eine steuerbare Umlenkvorrichtung (70) für den Laserstrahl (12') aufweist,
und die Umlenkvorrichtung (70) derart gesteuert wird, dass sich der Laserstrahl (12') durch den Gehäuse-Teilbereich (90) zu einer Auftreffstelle (13) erstreckt, welche sich im vorgegebenen Rotor-Teilbereich (92; 98; 430) befindet.

18. Verfahren nach Anspruch 17, bei welchem die Umlenkvorrichtung (70) derart gesteuert wird, dass der Laserstrahl (12') durch die Umlenkung parallel versetzt wird.

19. Verfahren nach Anspruch 17, bei welchem die Umlenkvorrichtung (70) derart gesteuert wird, dass die Richtung des Laserstrahls (12') verändert wird.

20. Verfahren nach Anspruch 19, bei welchem die Umlenkvorrichtung (70) derart gesteuert wird, dass sich der Laserstrahl (12') an einer Stelle des Gehäuse-Teilbereichs (90) durch diesen Teilbereich hindurch zum vorgegebenen Rotor-Teilbereich (92; 430) erstreckt.

21. Verfahren nach einem der vorhergehenden Ansprüche, bei welchem der Lüfter (15) einen Innenstator (44) aufweist, welcher bestromt wird, um im Schritt A) den Rotor (22) in Drehung zur versetzen.

22. Verfahren nach einem der vorhergehenden Ansprüche, bei welchem der Werkstoff an der Position der Unwucht von dem Rotor-Teilbereich (92; 430) während der Drehung des Rotors (22) durch entsprechende Ansteuerung der Laservorrichtung (10) abgetragen wird.

23. Verfahren nach einem der vorhergehenden Ansprüche, bei welchem der Lüfter (15) auf einem Werkstückträger (110) angeordnet wird (S730), welcher seinerseits in einer Bearbeitungszelle (150) angeordnet wird (S740),
und der Rotor 22 in dieser Bearbeitungszelle (150) mittels der Laservorrichtung (10) ausgewuchtet wird.

24. Anordnung zum Auswuchten eines Lüfters (15) mittels einer steuerbaren, außerhalb des Lüfters angeordneten Laservorrichtung (10), welche zur Erzeugung eines Laserstrahls (12') ausgebildet ist,
welcher Lüfter (15) ein Lüftergehäuse (16) und einen in dem Lüftergehäuse drehbar gelagerten Rotor (22) aufweist;
welcher Rotor (22) eine Drehachse und eine Rotorumfangsfläche (24, 26) aufweist und zumindest in einem Rotor-Teilbereich (92; 430), welcher Rotor-Teilbereich (92; 430) sich auf der Rotorumfangsfläche (24, 26) befindet, aus einem Werkstoff ausgebildet ist, der durch den Laserstrahl (12') bearbeitbar ist;
welches Lüftergehäuse (16) zumindest in einem Gehäuse-Teilbereich (90) derart ausgebildet ist, dass es eine Bearbeitung des Rotor-Teilbereichs (92) mittels der Laservorrichtung (10) durch einen von dieser ausgehenden, sich durch den Gehäuse-Teilbereich (90) zum Rotor-Teilbereich (92) erstreckenden Laserstrahl (12') ermöglicht; welche Anordnung aufweist:
einen Werkstückträger (110) zur Anordnung des Lüfters;
eine Bearbeitungszelle (150), in welcher der Werkstückträger zur Auswuchtung des Lüfters angeordnet ist;
eine Messeinrichtung (142) zur Messung der durch den Lüfter erzeugten Unwucht,
welche ausgebildet ist, mindestens eine Bearbeitungsstelle im Rotor-Teilbereich (92) zur Reduzierung der Unwucht zu bestimmen;
eine Recheneinheit (144) zur Bestimmung von Steuersignalen für die Laservorrichtung;
eine Steuereinheit (146) zur Steuerung der Laservorrichtung in Reaktion auf die Steuersignale, welche ausgebildet ist, einen sich durch den Gehäuse-Teilbereich zu der Bearbeitungszelle erstreckenden Laserstrahl (12', 12", 12''') zu erzeugen, um dort Material abzutragen,
welche Steuereinheit (146) zur Ausführung folgender Schritte ausgebildet ist:
A) Der Rotor (22) des Lüfters (15) wird in Drehung versetzt (S750);
B) die durch den Rotor (22) erzeugte Unwucht wird gemessen, um mindestens eine Bearbeitungsstelle (432a bis 432k) im vorgegebenen Rotor-Teilbereich (92; 430) zu ermitteln (S760), welche Bearbeitungsstelle (432a bis 432k) für die Reduzierung der gemessenen Unwucht geeignet ist;
C) die Laservorrichtung (10) wird angesteuert, um einen Laserstrahl (12') so zu erzeugen, dass dieser auf eine Auftreffstelle (13') am vorgegebenen Rotor-Teilbereich (92; 430) des rotierenden Rotors (22) gerichtet ist, welcher Rotor-Teilbereich (92; 430) sich auf der Rotorumfangsfläche befindet;
D) die Laservorrichtung (10) wird so angesteuert, dass bei einer Lage der Auftreffstelle (13', 13", 13''') innerhalb des vorgegebenen Rotor-Teilbereichs (92; 430), welcher sich auf der Rotorumfangsfläche befindet, durch Abtragen des durch den Laserstrahl (12') bearbeitbaren Werkstoffs von der ermittelten mindestens einen Bearbeitungsstelle (432a bis 432k) dort von dem rotierenden Rotor (22) Werkstoff abgetragen wird;
E) die Auftreffstelle (13') des Laserstrahls (12') wird innerhalb des vorgegebenen Rotor-Teilbereichs (92; 430), welcher sich auf der Rotorumfangsfläche befindet, an eine von der bisherigen Auftreffstelle (13') verschiedene Stelle (13") bewegt;
F) die Laservorrichtung (10) wird weiterhin gemäß Schritt D) so gesteuert, dass bei einer Lage der Auftreffstelle (13', 13", 13''') innerhalb des vorgegebenen Rotor-Teilbereichs (92; 430), welcher sich auf der Rotorumfangsfläche befindet, durch Abtragen des durch den Laserstrahl (12') bearbeitbaren Werkstoffs von der ermittelten mindestens einen Bearbeitungsstelle (92; 432) dort von dem rotierenden Rotor (22) Werkstoff abgetragen wird;
G) die Schritte E) und F) werden wiederholt, bis eine Werkstoffmenge von der ermittelten mindestens einen Bearbeitungsstelle (92; 432) des vorgegebenen Rotor-Teilbereichs (92; 430) abgetragen ist, welche abgetragene Werkstoffmenge zur Reduzierung der beim Schritt B) ermittelten Unwucht dient.

25. Anordnung nach Anspruch 24, bei welcher eine Absauganlage (160) zum Absaugen des von dem vorgegebenen Rotor-Teilbereich (92; 430) abgetragenen Werkstoffs vorgesehen ist.

26. Anordnung nach Anspruch 24 oder 25, bei welcher die Steuereinheit (146) zusätzlich dazu ausgebildet ist,
(i) den auszuwuchtenden Lüfter (15) anzusteuern, um dessen Rotor (22) in Drehung zu versetzen, und
(ii) die Messeinrichtung (142) anzusteuern, um die durch den rotierenden Lüfter erzeugte Unwucht bei der Drehung des Rotors (22) zu messen.

27. Anordnung nach Anspruch 26, bei welcher die Steuereinheit (146) dazu ausgebildet ist, die Laservorrichtung (10) während der Drehung des Rotors (22) anzusteuern, um das Material im Bereich der Position der Unwucht von dem vorgegebenen Rotor-Teilbereich (92; 430) abzutragen.

28. Anordnung nach Anspruch 26, bei welcher die Steuereinheit (146) dazu ausgebildet ist, den Werkstoff an der Position der Unwucht im Stillstand des Rotors (22) von dem vorgegebenen Rotor-Teilbereich (92; 430) abzutragen.

29. Anordnung nach einem der Ansprüche 24 bis 28, bei welcher die Laservorrichtung (10) dazu ausgebildet ist, einen Laserstrahl (12', 12", 12''') mit für den Werkstoff des vorgegebenen Rotor-Teilbereichs (92; 430) geeigneter Wellenlänge zu erzeugen.

30. Anordnung nach einem der Ansprüche 24 bis 28, bei welcher die Messeinrichtung (142) dazu ausgebildet ist, die Laservorrichtung (10) zum Messen der durch den Rotor (22) erzeugten Unwucht anzusteuern.

31. Anordnung nach einem der Ansprüche 24 bis 30, bei welcher die Rotorumfangsfläche eine Seitenfläche eines Rotortopfs (24) und mit dieser verbundene Lüfterflügel (26) aufweist,
und die Steuereinheit (146) dazu ausgebildet ist, die Laservorrichtung (10) zur Abtragung von Material im Bereich dieser Seitenfläche anzusteuern.

32. Anordnung nach Anspruch 31, bei welcher die Rotorumfangsfläche eine Seitenfläche eines Rotortopfs (34) und mit dieser verbundene Lüfterflügel (26) umfasst,
und bei welcher die Steuereinheit (146) dazu ausgebildet ist, die Laservorrichtung (10) zur Abtragung von Material im Bereich der Lüfterflügel (26) anzusteuern.

33. Anordnung nach einem der Ansprüche 24 bis 32, bei welcher der Gehäuse-Teilbereich (90) aus einem für den Laserstrahl (12', 12", 12''') im Wesentlichen durchlässigen Werkstoff besteht,
und die Steuereinheit (146) dazu ausgebildet ist, die Laservorrichtung (10) derart anzusteuern, dass der Laserstrahl (12', 12", 12''') durch diesen durchlässigen Werkstoff verläuft.

34. Anordnung nach einem der Ansprüche 24 bis 32, bei welcher der Gehäuse-Teilbereich (90) des auszuwuchtenden Lüfters aus einem den Laserstrahl (12', 12", 12''') absorbierenden Werkstoff ausgebildet ist,
und bei welcher die Steuereinheit (146) dazu ausgebildet ist:
(i) Die Laservorrichtung (10) anzusteuern, um durch den Laserstrahl (12', 12", 12''') in dem Gehäuse-Teilbereich (90) eine Durchtrittsöffnung (96) zu erzeugen;
(ii) die Laservorrichtung (10) derart anzusteuern, dass sich der Laserstrahl (12', 12", 12''') zwecks Abtragung von Werkstoff von dem vorgegebenen Rotor-Teilbereich (92; 430) durch diese Durchtrittsöffnung (96) hindurch zu diesem Rotor-Teilbereich (92; 430) erstreckt.

35. Anordnung nach einem der Ansprüche 24 bis 34, bei welcher die Laservorrichtung (10) eine steuerbare Umlenkvorrichtung (14; 70; 134) zur Umlenkung des Laserstrahls (12', 12", 12''') aufweist, welche dazu ausgebildet ist, den Laserstrahl durch den Gehäuse-Teilbereich (90) hindurch auf den vorgegebenen Rotor-Teilbereich (92; 430) zu richten.

36. Anordnung nach Anspruch 35, bei welcher die Umlenkvorrichtung (14; 70; 134) dazu ausgebildet ist, den Laserstrahl (12', 12", 12''') parallel zu versetzen.

37. Anordnung nach Anspruch 35, bei welcher die Umlenkvorrichtung (70) dazu ausgebildet ist, die Richtung des Laserstrahls (12', 12", 12''') zu verändern.

38. Anordnung nach Anspruch 37, bei welcher die Umlenkvorrichtung (70) dazu ausgebildet ist, den Laserstrahl (12', 12", 12''') über eine Stelle des Gehäuse-Teilbereichs (90) und durch diesen Teilbereich hindurch auf den vorgegebenen Rotor-Teilbereich (92; 430) zu richten.

## Claims

1. Method for balancing a fan (15) by means of a controllable laser device (10) that is arranged outside the fan and is designed to generate a laser beam (12'),
which fan (15) comprises a fan housing (16) and a rotor (22) rotatably mounted in the fan housing;
which rotor (22) comprises a rotary spindle and a rotor peripheral surface (24, 26) and is made, in at least one rotor portion (92; 430), of a material that can be machined by the laser beam (12'), which rotor portion (92; 430) is located on the rotor peripheral surface (24, 26); which fan housing (16) is designed in at least one housing portion (90) such that it allows the rotor portion (92) to be machined by means of the laser device (10) by a laser beam (12') emanating from said device and extending through the housing portion (90) to the rotor portion (92);
which method comprises the following steps:
A) the rotor (22) of the fan (15) is rotated (S750);
B) the imbalance produced by the rotor (22) is measured to determine (S760) at least one machining site (432a to 432k) in the predetermined rotor portion (92; 98; 430), which machining site (432a to 432k) is suitable for reducing the measured imbalance;
C) the laser device (10) is actuated to generate a laser beam (12') in such a way that said beam is directed at an impingement site (13') on the predetermined rotor portion (92; 430) of the rotating rotor (22), which rotor portion (92; 430) is located on the rotor peripheral surface;
D) the laser device (10) is actuated such that, when the impingement site (13', 13", 13''') is located within the predetermined rotor portion (92; 430) located on the rotor peripheral surface, material is removed from the rotating rotor (22) by removing the material that can be machined by the laser beam (12') from the at least one determined machining site (432a to 432k);
E) after the imbalance has been reduced, the impingement site (13', 13", 13''') of the laser beam (12') is moved within the predetermined rotor portion (92; 430) located on the rotor peripheral surface to a different site (13") from the preceding impingement site (13');
F) the laser device (10) is again controlled according to step D) in such a way that, when the impingement site (13', 13", 13"') is located within the predetermined rotor portion (92; 430) located on the rotor peripheral surface, material is removed from the rotating rotor (22) by removing the material that can be machined by the laser beam (12') from the at least one determined machining site (92; 432);
G) steps E) and F) are repeated until such an amount of material is removed from the at least one determined machining site (432a to 432k) of the predetermined rotor portion (92; 430) as to reduce the imbalance determined in step B).

2. Method according to claim 1, wherein, following each rotation of the rotor (22), the impingement site (13') of the laser beam (12') on the rotor (22) is adjusted by a predetermined increment.

3. Method according to either claim 1 or claim 2, wherein material is removed from the rotor (22) in the form of removal lines by means of the interaction of the laser beam (12') at the location of the impingement site (13') at that moment and the rotation of the rotor (22) relative to said location of the impingement site (13').

4. Method according to any of claims 1 to 3, wherein, when balancing at a machining site (432a to 432k), a rectangular region of material is removed from the rotor (22).

5. Method according to any of the preceding claims, wherein the material removed from the predetermined rotor portion (92; 430) is suctioned away (S790).

6. Method according to any of the preceding claims, wherein material is removed by the laser beam (12', 12", 12''') at a plurality of machining sites (432a to 432k).

7. Method according to any of the preceding claims, wherein the predetermined rotor portion (92; 430) is made of plastics material, ceramics or metal.

8. Method according to any of the preceding claims, wherein the predetermined rotor portion (92; 430) is made of a combination of plastics material, ceramics and/or metal.

9. Method according to either claim 7 or claim 8, wherein the predetermined rotor portion (92; 430) is made of plastics material containing ceramic or metal pigments.

10. Method according to any of claims 7 to 9, wherein the predetermined rotor portion (92; 430) is made of a mixture of plastics material with ceramics or metal.

11. Method according to any of the preceding claims, wherein the laser device (10) comprises a laser (18) for generating laser radiation having a wavelength suitable for machining the material of the predetermined rotor portion (92; 430).

12. Method according to any of the preceding claims, wherein the imbalance occurring during operation is measured by means of the laser device (10).

13. Method according to any of the preceding claims, wherein the rotor peripheral surface (92) comprises a side surface of a rotor pot (24) and fan blades (26) connected thereto, and wherein material is removed by the laser beam in the region of the side surface.

14. Method according to claim 13, wherein material is also removed by the laser beam in the region of the fan blades (26).

15. Method according to any of the preceding claims, wherein the housing portion (90) is made of a material that absorbs the laser beam (12'), which method also comprises the following steps:
C1) the laser device (10) is actuated such that a through-opening (96) is made in a portion (90) of the fan housing by the laser beam (12');
C2) the laser device (10) is actuated in step C1) such that the laser beam (12') extends through this through-opening (96) to the predetermined rotor portion (98).

16. Method according to claim 15, wherein the through-opening (96) is closed after the balancing, in particular by means of a sticker.

17. Method according to any of the preceding claims, wherein the laser device (10) comprises a controllable deflection device (70) for the laser beam (12'),
and the deflection device (70) is controlled in such a way that the laser beam (12') extends through the housing portion (90) to an impingement site (13) located in the predetermined rotor portion (92; 98; 430).

18. Method according to claim 17, wherein the deflection device (70) is controlled such that the laser beam (12') is offset in parallel by the deflection.

19. Method according to claim 17, wherein the deflection device (70) is controlled such that the direction of the laser beam (12') is changed.

20. Method according to claim 19, wherein the deflection device (70) is controlled such that the laser beam (12') extends, at one point of the housing portion (90), through this portion to the predetermined rotor portion (92; 430).

21. Method according to any of the preceding claims, wherein the fan (15) has an internal stator (44) supplied with current in order to rotate the rotor (22) in step A).

22. Method according to any of the preceding claims, wherein, during rotation of the rotor (22), the material is removed from the rotor portion (92; 430) at the position of the imbalance by actuating the laser device (10) accordingly.

23. Method according to any of the preceding claims, wherein the fan (15) is arranged (S730) on a workpiece support (110) which is in turn arranged (S740) in a machining cell (150),
and the rotor (22) is balanced by means of the laser device (10) in said machining cell (150).

24. Arrangement for balancing a fan (15) by means of a controllable laser device (10) that is arranged outside the fan and is designed to generate a laser beam (12'),
which fan (15) comprises a fan housing (16) and a rotor (22) rotatably mounted in the fan housing;
which rotor (22) comprises a rotary spindle and a rotor peripheral surface (24, 26) and is made, in at least one rotor portion (92; 430), of a material that can be machined by the laser beam (12'), which rotor portion (92; 430) is located on the rotor peripheral surface (24, 26); which fan housing (16) is designed in at least one housing portion (90) such that it allows the rotor portion (92) to be machined by means of the laser device (10) by a laser beam (12') emanating from said device and extending through the housing portion (90) to the rotor portion (92);
which arrangement comprises:
a workpiece support (110) for arranging the fan;
a machining cell (150) in which the workpiece support for balancing the fan is arranged;
a measurement apparatus (142) for measuring the imbalance generated by the fan, which apparatus is designed to determine at least one machining site in the rotor portion (92) to reduce the imbalance;
a computing unit (144) for determining control signals for the laser device;
a control unit (146) for controlling the laser device in response to the control signals, which unit is designed to generate a laser beam (12', 12", 12"') that extends through the housing portion to the machining site in order to remove material at said site,
which control unit (146) is designed to carry out the following steps:
A) the rotor (22) of the fan (15) is rotated (S750);
B) the imbalance produced by the rotor (22) is measured to determine (S760) at least one machining site (432a to 432k) in the predetermined rotor portion (92; 430), which machining site (432a to 432k) is suitable for reducing the measured imbalance;
C) the laser device (10) is actuated to generate a laser beam (12') in such a way that said beam is directed at an impingement site (13') on the predetermined rotor portion (92; 430) of the rotating rotor (22), which rotor portion (92; 430) is located on the rotor peripheral surface;
D) the laser device (10) is actuated such that, when the impingement site (13', 13", 13"') is located within the predetermined rotor portion (92; 430) located on the rotor peripheral surface, material is removed from the rotating rotor (22) by removing the material that can be machined by the laser beam (12') from the at least one determined machining site (432a to 432k);
E) the impingement site (13') of the laser beam (12') is moved within the predetermined rotor portion (92; 430) located on the rotor peripheral surface to a different site (13") from the preceding impingement site (13');
F) the laser device (10) is again controlled according to step D) in such a way that, when the impingement site (13', 13", 13"') is located within the predetermined rotor portion (92; 430) located on the rotor peripheral surface, material is removed from the rotating rotor (22) by removing the material that can be machined by the laser beam (12') from the at least one determined machining site (92; 432);
G) steps E) and F) are repeated until such an amount of material is removed from the at least one determined machining site (92; 432) of the predetermined rotor portion (92; 430) as to reduce the imbalance determined in step B).

25. Arrangement according to claim 24, wherein a suction system (160) is provided for suctioning away the material removed from the predetermined rotor portion (92; 430).

26. Arrangement according to either claim 24 or claim 25, wherein the control unit (146) is also designed to:
(i) actuate the fan (15) being balanced in order to rotate the rotor (22) thereof, and
(ii) actuate the measurement apparatus (142) in order to measure the imbalance generated by the rotating fan when the rotor (22) is rotating.

27. Arrangement according to claim 26, wherein the control unit (146) is designed to actuate the laser device (10) while the rotor (22) is rotating in order to remove the material from the predetermined rotor portion (92; 430) in the region of the position of the imbalance.

28. Arrangement according to claim 26, wherein the control unit (146) is designed to remove the material from the predetermined rotor portion (92; 430) at the position of the imbalance when the rotor (22) is stationary.

29. Arrangement according to any of claims 24 to 28, wherein the laser device (10) is designed to generate a laser beam (12', 12", 12"') having a wavelength suitable for the material of the predetermined rotor portion (92; 430).

30. Arrangement according to any of claims 24 to 28, wherein the measurement apparatus (142) is designed to actuate the laser device (10) in order to measure the imbalance generated by the rotor (22).

31. Arrangement according to any of claims 24 to 30, wherein the rotor peripheral surface comprises a side surface of a rotor pot (24) and fan blades (26) connected thereto, and the control unit (146) is designed to actuate the laser device (10) in order to remove material in the region of this side surface.

32. Arrangement according to claim 31, wherein the rotor peripheral surface comprises a side surface of a rotor pot (34) and fan blades (26) connected thereto,
and wherein the control unit (146) is designed to actuate the laser device (10) in order to remove material in the region of the fan blades (26).

33. Arrangement according to any of claims 24 to 32, wherein the housing portion (90) consists of a material that is substantially permeable to the laser beam (12', 12", 12'''), and the control unit (146) is designed to actuate the laser device (10) such that the laser beam (12', 12", 12''') extends through this permeable material.

34. Arrangement according to any of claims 24 to 32, wherein the housing portion (90) of the fan being balanced is made of a material that absorbs the laser beam (12', 12", 12"'), and wherein the control unit (146) is designed to:
(i) actuate the laser device (10) in order to make a through-opening (96) in the housing portion (90) by means of the laser beam (12', 12", 12''');
(ii) actuate the laser device (10) such that the laser beam (12', 12", 12"') extends through this through-opening (96) to the rotor portion (92; 430) in order to remove material from said predetermined rotor portion (92; 430).

35. Arrangement according to any of claims 24 to 34, wherein the laser device (10) comprises a controllable deflection device (14; 70; 134) for deflecting the laser beam (12', 12", 12'''), which deflection device is designed to direct the laser beam through the housing portion (90) to the predetermined rotor portion (92; 430).

36. Arrangement according to claim 35, wherein the deflection device (14; 70; 134) is designed to offset the laser beam (12', 12", 12''') in parallel.

37. Arrangement according to claim 35, wherein the deflection device (70) is designed to change the direction of the laser beam (12', 12", 12"').

38. Arrangement according to claim 37, wherein the deflection device (70) is designed to direct the laser beam (12', 12", 12''') over a point of the housing portion (90) and through this portion to the predetermined rotor portion (92; 430).

## Revendications

1. Procédé pour équilibrer un ventilateur (15) au moyen d'un dispositif laser asservissable (10), disposé à l'extérieur du ventilateur et réalisé pour produire un faisceau laser (12'),
ledit ventilateur (15) présentant un boîtier de ventilateur (16) et un rotor (22) monté rotatif dans le boîtier de ventilateur ;
ledit rotor (22) présentant un axe de rotation et une face périphérique de rotor (24, 26) et étant réalisé, au moins dans une région partielle de rotor (92 ; 430), ladite région partielle de rotor (92 ; 430) se trouvant sur la face périphérique de rotor (24, 26), en un matériau qui peut être usiné par le faisceau laser (12') ;
ledit boîtier de ventilateur (16) étant, au moins dans une région partielle de boîtier (90), réalisé de telle sorte qu'il permet un usinage de la région partielle de rotor (92) au moyen du dispositif laser (10), par un faisceau laser (12') partant de ce dispositif et traversant la région partielle de boîtier (90) pour atteindre la région partielle de rotor (92) ;
ledit procédé présentant les étapes suivantes :
A) le rotor (22) du ventilateur (15) est mis en rotation (S750) ;
B) le balourd produit par le rotor (22) est mesuré, afin de déterminer (S760) au moins un point d'usinage (432a à 432k) dans la région partielle de rotor prédéfinie (92 ; 98 ; 430), ledit point d'usinage (432a à 432k) étant apte à réduire le balourd mesuré ;
C) le dispositif laser (10) est asservi afin de produire un faisceau laser (12') de telle sorte que ce dernier est dirigé sur un point d'impact (13') sur la région partielle de rotor prédéfinie (92 ; 430) du rotor en rotation (22), ladite région partielle de rotor (92 ; 430) se trouvant sur la face périphérique de rotor ;
D) le dispositif laser (10) est asservi de telle sorte que, le point d'impact (13', 13", 13"') se trouvant à l'intérieur de la région partielle de rotor prédéfinie (92 ; 430) située sur la face périphérique de rotor, du matériau est, par enlèvement du matériau pouvant être usiné par le faisceau laser (12') au niveau du point d'usinage au moins unique déterminé (432a à 432k), enlevé du rotor en rotation (22) en ce point ;
E) à la suite de cette réduction du balourd, le point d'impact (13', 13", 13''') du faisceau laser (12') est, à l'intérieur de la région partielle de rotor prédéfinie (92 ; 430) située sur la face périphérique de rotor, déplacé en un point (13") différent du point d'impact précédent (13') ;
F) le dispositif laser (10) est à nouveau asservi, conformément à l'étape D), de telle sorte que, le point d'impact (13', 13", 13"') se trouvant à l'intérieur de la région partielle de rotor prédéfinie (92 ; 430) située sur la face périphérique de rotor, du matériau est, par enlèvement du matériau pouvant être usiné par le faisceau laser (12') au niveau du point d'usinage au moins unique déterminé (92 ; 432), enlevé du rotor en rotation (22) en ce point ;
G) les étapes E) et F) sont répétées jusqu'à ce qu'une quantité de matériau soit enlevée du point d'usinage au moins unique déterminé (432a à 432k) de la région partielle de rotor prédéfinie (92 ; 430), ladite quantité de matériau enlevée servant à réduire le balourd déterminé à l'étape B).

2. Procédé selon la revendication 1, selon lequel, à la suite de chaque rotation du rotor (22), le point d'impact (13') du faisceau laser (12') sur le rotor (22) est modifié d'un incrément prédéterminé.

3. Procédé selon la revendication 1 ou 2, selon lequel l'enlèvement de matériau du rotor (22) s'effectue sous la forme de lignes d'enlèvement par la coopération du faisceau laser (12') au point d'impact instantané (13') et de la rotation du rotor (22) par rapport à ce point d'impact instantané (13').

4. Procédé selon l'une des revendications 1 à 3, selon lequel, lors de l'équilibrage, une zone rectangulaire de matériau est enlevée du rotor (22) en un point d'usinage (432a à 432k).

5. Procédé selon l'une des revendications précédentes, selon lequel le matériau enlevé de la région partielle de rotor prédéfinie (92 ; 430) est évacué par aspiration (S790).

6. Procédé selon l'une des revendications précédentes, selon lequel le faisceau laser (12', 12", 12"') enlève du matériau en une pluralité de points d'usinage (432a à 432k).

7. Procédé selon l'une des revendications précédentes, selon lequel la région partielle de rotor prédéfinie (92 ; 430) est constituée de matière plastique, de matériau céramique ou de métal.

8. Procédé selon l'une des revendications précédentes, selon lequel la région partielle de rotor prédéfinie (92 ; 430) est constituée d'un composite de matière plastique, de matériau céramique et/ou de métal.

9. Procédé selon la revendication 7 ou 8, selon lequel la région partielle de rotor prédéfinie (92 ; 430) est constituée de matière plastique avec des pigments de matériau céramique ou de métal.

10. Procédé selon l'une des revendications 7 à 9, selon lequel la région partielle de rotor prédéfinie (92 ; 430) est constituée d'un mélange de matière plastique avec du matériau céramique ou du métal.

11. Procédé selon l'une des revendications précédentes, selon lequel le dispositif laser (10) présente un laser (18) pour produire un rayonnement laser avec une longueur d'onde apte à usiner le matériau de la région partielle de rotor prédéfinie (92 ; 430).

12. Procédé selon l'une des revendications précédentes, selon lequel la mesure du balourd se produisant en fonctionnement est effectuée au moyen du dispositif laser (10).

13. Procédé selon l'une des revendications précédentes, selon lequel la face périphérique de rotor (92) comprend une face latérale d'un pot de rotor (24) et des ailettes de ventilateur (26) reliées à ce dernier, et selon lequel du matériau est enlevé par le faisceau laser dans la région de la face latérale.

14. Procédé selon la revendication 13, selon lequel du matériau est enlevé par le faisceau laser également dans la région des ailettes de ventilateur (26).

15. Procédé selon l'une des revendications précédentes, selon lequel la région partielle de boîtier (90) est constituée d'un matériau absorbant le faisceau laser (12'), ledit procédé présentant en outre les étapes suivantes :
C1) le dispositif laser (10) est asservi de telle sorte que le faisceau laser (12') crée une ouverture de passage (96) sur une région partielle (90) du boîtier de ventilateur ;
C2) le dispositif laser (10) est, à l'étape C1), asservi de telle sorte que le faisceau laser (12') s'étend à travers cette ouverture de passage (96) vers la région partielle de rotor prédéfinie (98).

16. Procédé selon la revendication 15, selon lequel l'ouverture de passage (96) est fermée à la suite de l'équilibrage, en particulier au moyen d'un autocollant.

17. Procédé selon l'une des revendications précédentes, selon lequel le dispositif laser (10) présente un dispositif de déviation asservissable (70) pour le faisceau laser (12'),
et le dispositif de déviation (70) est asservi de telle sorte que le faisceau laser (12') traverse la région partielle de boîtier (90) pour atteindre un point d'impact (13) qui se trouve dans la région partielle de rotor prédéfinie (92 ; 98 ; 430).

18. Procédé selon la revendication 17, selon lequel le dispositif de déviation (70) est asservi de telle sorte que le faisceau laser (12') est déporté en parallèle par la déviation.

19. Procédé selon la revendication 17, selon lequel le dispositif de déviation (70) est asservi de telle sorte que la direction du faisceau laser (12') est modifiée.

20. Procédé selon la revendication 19, selon lequel le dispositif de déviation (70) est asservi de telle sorte que le faisceau laser (12') s'étend, en un point de la région partielle de boîtier (90), à travers cette région partielle pour atteindre la région partielle de rotor prédéfinie (92 ; 430).

21. Procédé selon l'une des revendications précédentes, selon lequel le ventilateur (15) présente un stator intérieur (44), qui est mis sous tension afin de mettre en rotation le rotor (22) à l'étape A).

22. Procédé selon l'une des revendications précédentes, selon lequel le matériau est, par un asservissement correspondant du dispositif laser (10), enlevé de la région partielle de rotor (92 ; 430) à la position de balourd pendant la rotation du rotor (22).

23. Procédé selon l'une des revendications précédentes, selon lequel le ventilateur (15) est disposé (S730) sur un porte-pièce (110), qui est lui-même disposé (S740) dans une cellule d'usinage (150),
et le rotor (22) est équilibré dans cette cellule d'usinage (150) au moyen du dispositif laser (10).

24. Ensemble pour équilibrer un ventilateur (15) au moyen d'un dispositif laser asservissable (10), disposé à l'extérieur du ventilateur et réalisé pour produire un faisceau laser (12'),
ledit ventilateur (15) présentant un boîtier de ventilateur (16) et un rotor (22) monté rotatif dans le boîtier de ventilateur ;
ledit rotor (22) présentant un axe de rotation et une face périphérique de rotor (24, 26) et étant réalisé, au moins dans une région partielle de rotor (92 ; 430), ladite région partielle de rotor (92 ; 430) se trouvant sur la face périphérique de rotor (24, 26), en un matériau qui peut être usiné par le faisceau laser (12') ;
ledit boîtier de ventilateur (16) étant, au moins dans une région partielle de boîtier (90), réalisé de telle sorte qu'il permet un usinage de la région partielle de rotor (92) au moyen du dispositif laser (10), par un faisceau laser (12') partant de ce dispositif et traversant la région partielle de boîtier (90) pour atteindre la région partielle de rotor (92) ;
ledit ensemble présentant :
un porte-pièce (110) pour y disposer le ventilateur ;
une cellule d'usinage (150), dans laquelle est disposé le porte-pièce pour équilibrer le ventilateur ;
un équipement de mesure (142) pour mesurer le balourd produit par le ventilateur, équipement qui est réalisé pour déterminer au moins un point d'usinage dans la région partielle de rotor (92) afin de réduire le balourd ;
une unité de calcul (144) pour déterminer des signaux de commande pour le dispositif laser ;
une unité de commande (146) pour commander le dispositif laser en réaction aux signaux de commande, unité qui est réalisée pour produire un faisceau laser (12', 12", 12"') traversant la région partielle de boîtier pour atteindre la cellule d'usinage, afin d'y enlever du matériau,
ladite unité de commande (146) étant réalisée pour exécuter les étapes suivantes :
A) le rotor (22) du ventilateur (15) est mis en rotation (S750) ;
B) le balourd produit par le rotor (22) est mesuré, afin de déterminer (S760) au moins un point d'usinage (432a à 432k) dans la région partielle de rotor prédéfinie (92 ; 430), ledit point d'usinage (432a à 432k) étant apte à réduire le balourd mesuré ;
C) le dispositif laser (10) est asservi, afin de produire un faisceau laser (12') de telle sorte que ce dernier est dirigé sur un point d'impact (13') sur la région partielle de rotor prédéfinie (92 ; 430) du rotor en rotation (22), ladite région partielle de rotor (92 ; 430) se trouvant sur la face périphérique de rotor ;
D) le dispositif laser (10) est asservi de telle sorte que, le point d'impact (13', 13", 13''') se trouvant à l'intérieur de la région partielle de rotor prédéfinie (92 ; 430) située sur la face périphérique de rotor, du matériau est, par enlèvement du matériau pouvant être usiné par le faisceau laser (12') au niveau du point d'usinage au moins unique déterminé (432a à 432k), enlevé du rotor en rotation (22) en ce point ;
E) le point d'impact (13') du faisceau laser (12') est, à l'intérieur de la région partielle de rotor prédéfinie (92 ; 430) située sur la face périphérique de rotor, déplacé en un point (13") différent du point d'impact précédent (13') ;
F) le dispositif laser (10) est à nouveau asservi, conformément à l'étape D), de telle sorte que, le point d'impact (13', 13", 13''') se trouvant à l'intérieur de la région partielle de rotor prédéfinie (92 ; 430) située sur la face périphérique de rotor, du matériau est, par enlèvement du matériau pouvant être usiné par le faisceau laser (12') au niveau du point d'usinage au moins unique déterminé (92 ; 432), enlevé du rotor en rotation (22) en ce point ;
G) les étapes E) et F) sont répétées jusqu'à ce qu'une quantité de matériau soit enlevée du point d'usinage au moins unique déterminé (92 ; 432) de la région partielle de rotor prédéfinie (92 ; 430), ladite quantité de matériau enlevée servant à réduire le balourd déterminé à l'étape B).

25. Ensemble selon la revendication 24, dans lequel il est prévu une installation d'aspiration (160) pour évacuer par aspiration le matériau enlevé de la région partielle de rotor prédéfinie (92 ; 430).

26. Ensemble selon la revendication 24 ou 25, dans lequel l'unité de commande (146) est en outre réalisée pour
(i) asservir le ventilateur (15) à équilibrer, afin de mettre en rotation son rotor (22), et
(ii) asservir l'équipement de mesure (142), afin de mesurer le balourd produit par le ventilateur rotatif lors de la rotation du rotor (22).

27. Ensemble selon la revendication 26, dans lequel l'unité de commande (146) est réalisée pour asservir le dispositif laser (10) pendant la rotation du rotor (22), afin d'enlever le matériau de la région partielle de rotor prédéfinie (92 ; 430) dans la région de la position du balourd.

28. Ensemble selon la revendication 26, dans lequel l'unité de commande (146) est réalisée pour enlever le matériau de la région partielle de rotor prédéfinie (92 ; 430) à la position du balourd lorsque le rotor (22) est immobile.

29. Ensemble selon l'une des revendications 24 à 28, dans lequel le dispositif laser (10) est réalisé pour produire un faisceau laser (12', 12", 12''') avec la longueur d'onde appropriée pour le matériau de la région partielle de rotor prédéfinie (92 ; 430).

30. Ensemble selon l'une des revendications 24 à 28, dans lequel l'équipement de mesure (142) est réalisé pour asservir le dispositif laser (10) afin de mesurer le balourd produit par le rotor (22).

31. Ensemble selon l'une des revendications 24 à 30, dans lequel la face périphérique de rotor présente une face latérale d'un pot de rotor (24) et des ailettes de ventilateur (26) reliées à ce dernier,
et l'unité de commande (146) est réalisée pour asservir le dispositif laser (10) afin d'enlever du matériau dans la région de cette face latérale.

32. Ensemble selon la revendication 31, dans lequel la face périphérique de rotor comprend une face latérale d'un pot de rotor (34) et des ailettes de ventilateur (26) reliées à ce dernier,
et dans lequel l'unité de commande (146) est réalisée pour asservir le dispositif laser (10) afin d'enlever du matériau dans la région des ailettes de ventilateur (26).

33. Ensemble selon l'une des revendications 24 à 32, dans lequel la région partielle de boîtier (90) est constituée d'un matériau essentiellement perméable pour le faisceau laser (12', 12", 12'''),
et l'unité de commande (146) est réalisée pour asservir le dispositif laser (10) de telle sorte que le faisceau laser (12', 12", 12"') traverse ce matériau perméable.

34. Ensemble selon l'une des revendications 24 à 32, dans lequel la région partielle de boîtier (90) du ventilateur à équilibrer est constituée d'un matériau absorbant le faisceau laser (12', 12", 12'''),
et dans lequel l'unité de commande (146) est réalisée pour :
(i) asservir le dispositif laser (10) afin de produire par le faisceau laser (12', 12", 12''') une ouverture de passage (96) dans la région partielle de boîtier (90) ;
(ii) asservir le dispositif laser (10) de telle sorte que le faisceau laser (12', 12", 12'''), afin d'enlever du matériau de la région partielle de rotor prédéfinie (92 ; 430), s'étend à travers cette ouverture de passage (96) pour atteindre cette région partielle de rotor prédéfinie (92 ; 430).

35. Ensemble selon l'une des revendications 24 à 34, dans lequel le dispositif laser (10) présente un dispositif de déviation asservissable (14 ; 70 ; 134) pour dévier le faisceau laser (12', 12", 12'''), dispositif qui est réalisé pour diriger le faisceau laser, en traversant la région partielle de boîtier (90), vers la région partielle de rotor prédéfinie (92 ; 430).

36. Ensemble selon la revendication 35, dans lequel le dispositif de déviation (14 ; 70 ; 134) est réalisé pour déporter en parallèle le faisceau laser (12', 12", 12''').

37. Ensemble selon la revendication 35, dans lequel le dispositif de déviation (70) est réalisé pour modifier la direction du faisceau laser (12', 12", 12''').

38. Ensemble selon la revendication 37, dans lequel le dispositif de déviation (70) est réalisé pour diriger le faisceau laser (12', 12", 12"') sur un point de la région partielle de boîtier (90) et, en traversant cette région partielle, vers la région partielle de rotor prédéfinie (92 ; 430).
